# EUROPÄISCHE PATENTANMELDUNG

(11) **EP 0 623 515 A1**
(43) Veröffentlichungstag der Anmeldung: **09.11.1994**
(21) Anmeldenummer: 94106546.8
(22) Anmeldetag: 27.04.1994
(51) Int. Cl.: B65B 59/00, B65G 17/42, B65B 43/54

(54) **Vorrichtung zur Handhabung von Gegenständen beim Transport, insbesondere durch Abfüll- und/oder Verpackungsanlagen**

(30) Priorität: 05.05.1993 DE 4314783
(71) Anmelder: RUDOLF GÖRIG MASCHINENBAU, D-73630 Remshalden-Grunbach (DE)
(72) Erfinder: Görig, Rudolf, D-73630 Remshalden (DE)
(74) Vertreter: Rüger, Rudolf, Dr.-Ing.

(57) **Zusammenfassung**

Eine Vorrichtung zur Handhabung von Gegenständen beim Transport, insbesondere durch Abfüll- und/oder Verpackungsanlagen hindurch, arbeitet mit Trägerelementen (14a, b), die eine ebene Aufstellfläche (17) aufweisen und der Form und/oder der Art der Gegenstände angepaßt sind. In diesen Trägerelementen sind die Gegenstände vorübergehend aufgenommen. Die Anordnung ist derart getroffen, daß die Trägerelemente in Transportrichtung gesehen beidseitig mit zueinander parallelen Flächenbereichen (20) versehen sind und daß sie zur wahlweisen Förderung auf unterschiedlichen Transportmitteln eingerichtet sind.

## Beschreibung

Die Erfindung betrifft eine Vorrichtung zur Handhabung von Gegenständen beim Transport, insbesondere durch Abfüll- und/oder Verpackungsanlagen, mit Transportmitteln zum Fördern der Gegenstände zu wenigstens einer Behandlungsstation, sowie mit der Form und/oder der Art der Gegenstände angepassten, eine ebene Aufstellfläche aufweisenden Trägerelementen, in denen die Gegenstände vorübergehend aufgenommen sind und die mit den Transportmitteln zusammenwirkend ausgebildet sind.

Bei automatischen Abfüll- und/oder Verpackungsanlagen werden die zu befüllenden bzw. abzupackenden Behältnisse regelmäßig aufeinander folgend kontinuierlich oder diskontinuierlich an den einzelnen Füll- oder Behandlungsstationen vorbei geführt. Die dazu verwendeten Transportmittel sind beispielsweise Kettenförderer, Plattenförderer, Förderbänder und dergleichen; sie müssen auf die Gestalt und die Art der zu transportierenden Behältnisse abgestimmt sein, um deren sichere Mitnahme und Führung zu gewährleisten. Dies bedeutet, daß Änderungen der Gestalt der zu transportierenden Gegenstände, beispielsweise bei einem Produktwechsel entsprechende Veränderungen an den Transportmitteln der Anlagen bedingen, die teuer und aufwendig sind.

Um derartige Umstellarbeiten zu vermeiden, ist es aus der DE-PS 38 30 611 bekannt, adapterähnliche Trägerelemente zu verwenden, die außen der Form der jeweiligen Abfüll- bzw. Verpackungsanlage und innen den Konturen der jeweils die Anlage passierenden Behältnisse angepasst sind. Diese Trägerelemente sind in Draufsicht gesehen im wesentlichen U-förmig ausgebildet und mit einer Eisen- oder Magnetplatte versehen, die in die Rückseite des Steges des U-förmigen Trägerelementes eingearbeitet ist. Über diese Eisen- oder Magnetplatte kann jedes Trägerelement mit einem parallel zu dieser in gleicher Höhe umlaufenden Magnet- oder Eisenbandförderer gekuppelt werden, derart daß eine sichere Mitnahme der Trägerelemente gewährleistet ist. Bei einem Produktwechsel brauchen nunmehr lediglich die Trägerelemente ausgetauscht zu werden; Umstellungsarbeiten an den Fördermitteln oder den Transportwegen etc. entfallen.

Die in der Draufsicht U-förmigen Trägerelemente sind mit ihren Eisen- oder Magnetplatten aber speziell für das Zusammenwirken mit Magnet- oder Eisenbandförderern eingerichtet. Sie können zwar nach dem Verlassen der Eisen- oder Magnetbandförderer andere Anlageteile durchlaufen, doch müssen dann an den Transportwegen besondere Vorkehrungen getroffen werden, weil die auf gegenüberliegenden Stirnseiten durch gekrümmte Flächen begrenzten Trägerelemente sich sonst verklemmen oder verkeilen. Um dies zu verhindern, können besondere Führungsnuten und -leisten an den Transportwegen vorgesehen werden, die mit entsprechenden Einrichtungen an den Trägerelementen zusammenwirken, doch sind solche Maßnahmen aufwendig und unter Umständen störungsanfällig.

Aufgabe der Erfindung ist es, eine solche Vorrichtung zur Handhabung von Gegenständen beim Transport flexibler und vielseitiger einsetzbar zu machen, ohne daß dabei eine Verringerung der Betriebssicherheit in Kauf genommen werden müßte.

Zur Lösung dieser Aufgabe ist die eingangs genannte Vorrichtung erfindungsgemäß dadurch gekennzeichnet, daß die Trägerelemente in Transportrichtung gesehen beidseitig mit zueinander parallelen Flächenbereichen versehen sind und daß sie zur wahlweisen Förderung auf unterschiedlichen Transportmitteln eingerichtet sind.

Die parallelen Flächenbereiche gewährleisten, daß die Trägerelemente aufgestaut oder auf Stauförderern gefördert werden können, ohne daß ein gegenseitiges Ausbrechen der Trägerelemente zu befürchten wäre. Gleichzeitig sind aber die Trägerelemente so gestaltet, daß sie auf den für den jeweiligen Einsatzzweck zweckmäßigsten Fördermitteln transportiert werden können. Solche Fördermittel sind beispielsweise Platten-, Bänder-, normale Kettenförderer, angetriebene oder nicht angetriebene Rollenbahnen etc., aber auch Elevatorsysteme, rotierende und oszilierende Transporteinrichtungen, einschließlich Luftkissensystemen und dergleichen.

Alle diese Fördersysteme greifen entweder reibschlüssig an der ebenenen Aufstellfläche an oder sie haben Mitnehmer, die formschlüssig mit den Trägerelementen zusammenwirken, beispielsweise an den parallelen stirnseiten Flächenbereichen angreifen, oder aber die stirnseitig an den parallelen Flächenbereichen einander stoßenden Trägerelemente werden reibschlüssig in einer Staureihe auf einer Rollenbahn etc. bewegt.

Die Trägerelemente können in einer Ausführungsform auf wenigstens zwei aneinander angrenzenden Seiten zwei für den Transport wahlweise verwendbare Aufstellflachen aufweisen, so daß die transportierten Gegenstände, die für die jeweilige Handhabung oder Behandlung zweckmäßige Ausrichtung haben, ohne daß dafür die Trägerelemente ausgetauscht werden müßten. Besonders einfache Verhältnisse ergeben sich, wenn die Trägerelemente parallel zur Aufstellfläche eine im wesentlichen rechteckige Außenumrißgestalt aufweisen, die länglich oder quadratisch sein kann. Dabei können sie z. Bsp. mit einer im wesentlichen rechteckigen Grundplatte ausgebildet sein, auf der Aufnahmemittel für wenigstens einen Gegenstand angeordnet sind. Diese Aufnahmemittel können verstellbar ausgebildet sein, um damit den jeweiligen Gegenstand festzuklemmen oder um eine Anpassung an den aufgenommenen Gegenstand zu erlauben.

Bei einer anderen Ausführungsform können die Trägerelemente im wesentlichen nach Art eines U-förmigen Bügels ausgebildet sein, der entweder einen oder mehrere Gegenstände aufnimmt oder wenigstens einen der Gestalt zumindest einen Gegenstandes angepassten Einsatz aufweist, der zu einer Seite herausnehmbar ausgebildet ist. An dem Bügel können auch Einrichtungen zur lösbaren Aufnahme wenigstens eines Beutels oder Sackes vorgesehen sein, durch die der Beutel oder Sack mit aufgespreizter Füllöffnung haltbar ist, um nur eine der Vielzahl der produktabhängig denkbaren Ausgestaltungsmöglichkeiten zu erwähnen.

Die Trägerelemente sind in der Regel aus einem Kunststoff hergestellt; sie können gruppier- und gegebenenfalls sogar stapelbar sein, wie es auch möglich ist, sie auf in Transportrichtung einander gegenüberliegenden Seiten mit vorstehenden Leisten zu versehen, an denen die parallelen Flächenbereiche ausgebildet sind und die gegebenenfalls mit elastischen Puffern versehen sind. Um die Umlenkung der Träger in Biegungen oder Kurven ihres Bewegungsweges oder das Einfahren der Trägerelemente in Einlässe oder dergleichen zu erleichtern, können an den Leisten zu einer Seite der Trägerelemente hin abgeschrägte Bereiche vorhanden sein, die zu einer Seite hin keilförmig zusammenlaufend ausgebildet sind.

Andere Weiterbildungen der neuen Vorrichtung sind Gegenstand von Unteransprüchen.

In der Zeichnung sind Ausführungsbeispiele des Gegenstandes der Erfindung dargestellt. Es zeigen:
- Fig. 1: eine Abfüllanlage mit einer Vorrichtung gemäß der Erfindung in schematischer Darstellung und in einer Draufsicht,
- Fig. 2: eine Abfüllanlage mit einer anderen Ausführungsform einer Vorrichtung gemäß der Erfindung in einer Darstellung entsprechend Fig. 2,
- Fig. 3: eine Abfüllanlage mit einer Vorrichtung gemäß der Erfindung in einer weiteren geänderten Ausführungsform, in einer Darstellung entsprechend Fig. 1,
- Fig. 4: ein Trägerelement mit Verstelleinrichtung für eine Vorrichtung nach einer der Fig. 1 bis 3 in schematischer, perspektivischer Darstellung und in einem anderen Maßstab,
- Fig. 5: ein Trägerelement zur Aufnahme eines einzelnen Gegenstandes für eine Vorrichtung nach einer der Fig. 1 bis 3 in schematischer, perspektivischer Darstellung und in einem anderen Maßstab,
- Fig. 6, 7: ein bügelförmiges Trägerelement für die Vorrichtung nach einer der Fig. 1 bis 3 in schematischer, perspektivischer Darstellung unter Veranschaulichung des Zustandes bei der Benutzung einer ersten und einer zweiten Aufstellfläche,
- Fig. 8: ein bügelförmiges Trägerelement entsprechend Fig. 6, 7, in der Ausführungsform mit einem einschiebbaren Einsatz in schematischer, perspektivischer Darstellung entsprechend Fig. 7 und
- Fig. 9: ein bügelförmiges Trägerelement entsprechend Fig. 7 mit einer Einrichtung zur Aufnahme eines Beutels in schematischer, perspektivischer Darstellung entsprechend Fig. 7.

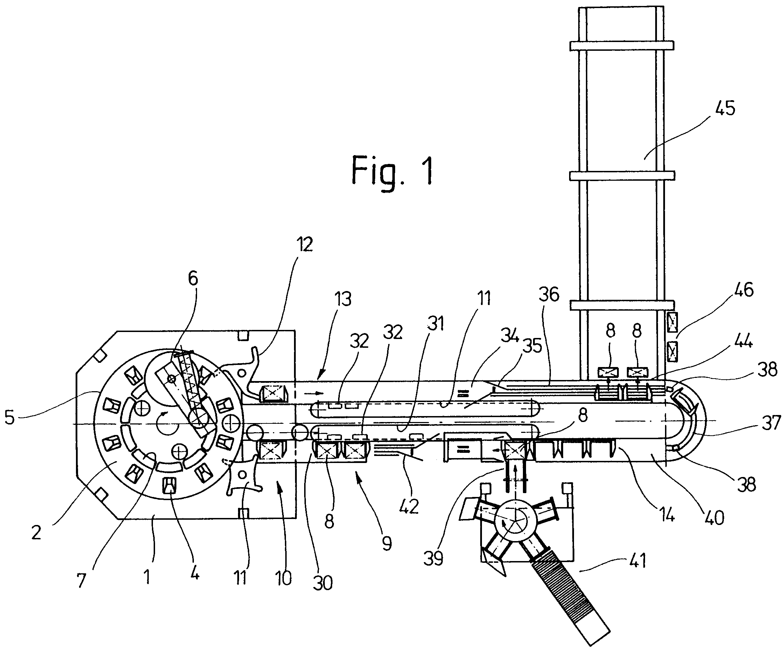

In den Fig. 1 bis 3 sind beispielhaft schematisch drei Abfüll- und Verpackungsanlagen veranschaulicht, in denen erfindungsgemäße Vorrichtungen zum Transport von Gegenständen in Form von Verpackungsbehältern Verwendung finden.

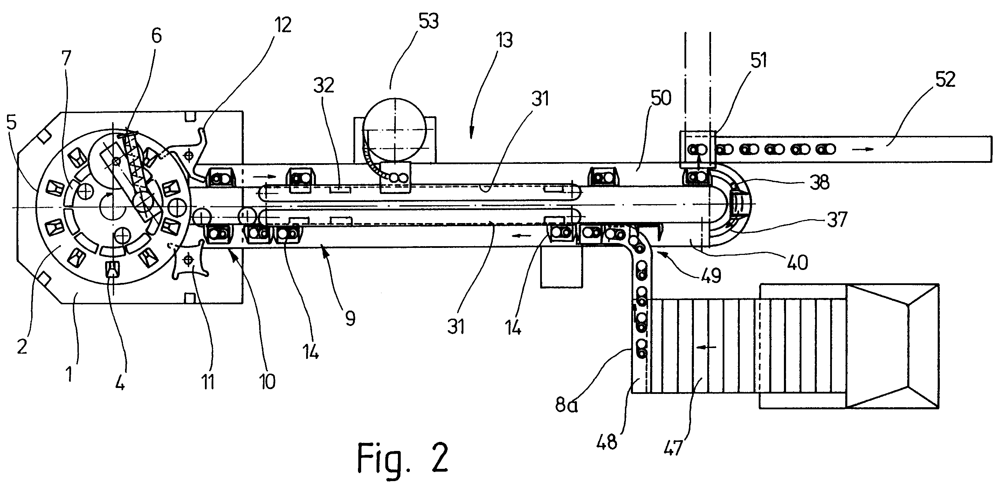

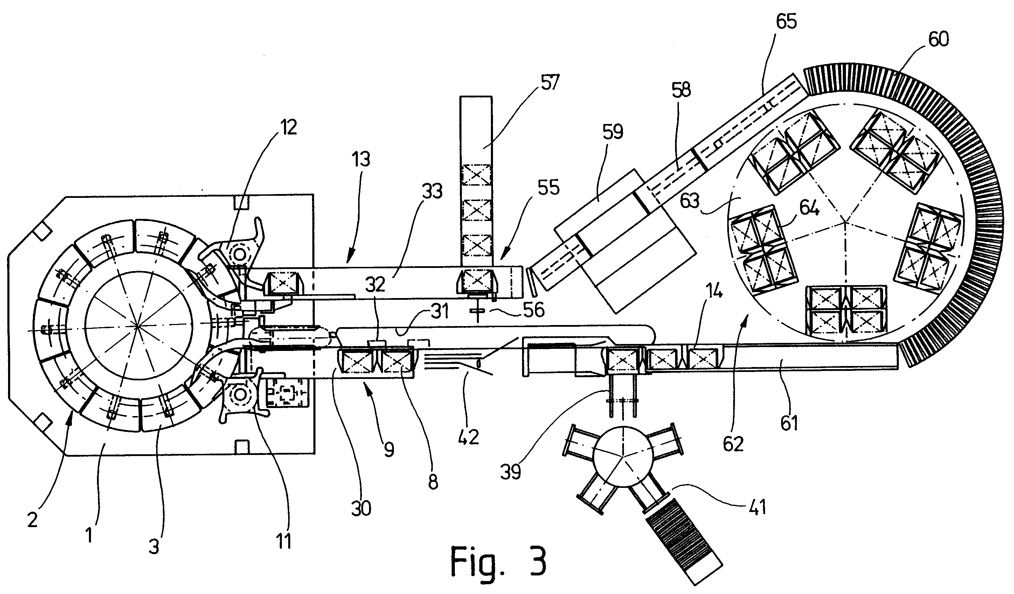

Jede dieser Anlagen weist eine Abfüllmaschine 1 auf, die als sogenannte Wägefüllmaschine ausgebildet ist und mit einem um eine vertikale Achse umlaufenden Drehtisch arbeitet, der in Fig. 3 bei 2 dargestellt ist und auf dem in kreisförmiger Anordnung einzelne Wägezellen 3 angeordnet sind, von denen jede zur Aufnahme eines zu befüllenden Verpackungsbehälters eingerichtet ist. Oberhalb des Drehtisches 2 sind den einzelnen Wägezellen 3 zugeordnete und gemeinsam mit diesen umlaufende Fülltrichter 4 (Fig. 1, 2) angeordnet - die in Fig. 3 zur besseren Veranschaulichung des Drehtisches 2 weggelassen sind und die am Boden eines kreisrunden Vorratsbehälters 5 vorgesehen sind, in den freifließendes schüttfähiges Füllgut, beispielsweise körniger oder granulatförmiger Natur eingebracht wird. Über einen bei 6 angedeuteten Schneckendosierer 6 und diesem zugeordnete nierenförmige Fülltrichter 7 kann ein zweites Füllgut, beispielsweise mehlartiger Konsistenz, in die Verpackungsbehälter eingebracht werden.

Bei jeder Wägezelle 3 münden jeweils zwei Fülltrichter 4, 7, von denen über den einen Fülltrichter 4 eine gravimetrische Dosierung des ersten Füllgutes und über den zweiten Fülltrichter 7 die Schneckendosierung des zweiten Füllgutes erfolgt.

Die zu befüllenden Behälter sind bei der Ausführungsform nach den Fig. 1 und 3 Faltschachteln oder Kartons 8 und bei der Ausführungsform nach Fig. 2 Flaschen 8a. Sie werden der Abfüllmaschine 1 jeweils ungefüllt durch ein Einlaufförderband 9 in einer Reihe aufeinanderfolgend zugeleitet, sodann bei 10 vereinzelt und durch einen Einlaufstern 11 einzeln auf die Wägezellen 3 aufgebracht, auf denen sie einen Wäge- und Füllzyklus durchlaufen bis sie nunmehr im gefüllten Zustand ausgangsseitig von einem Auslaufstern 12 auf ein Auslaufband 13 übergeben werden, das die gefüllten Behälter 8, 8a abtransportiert.

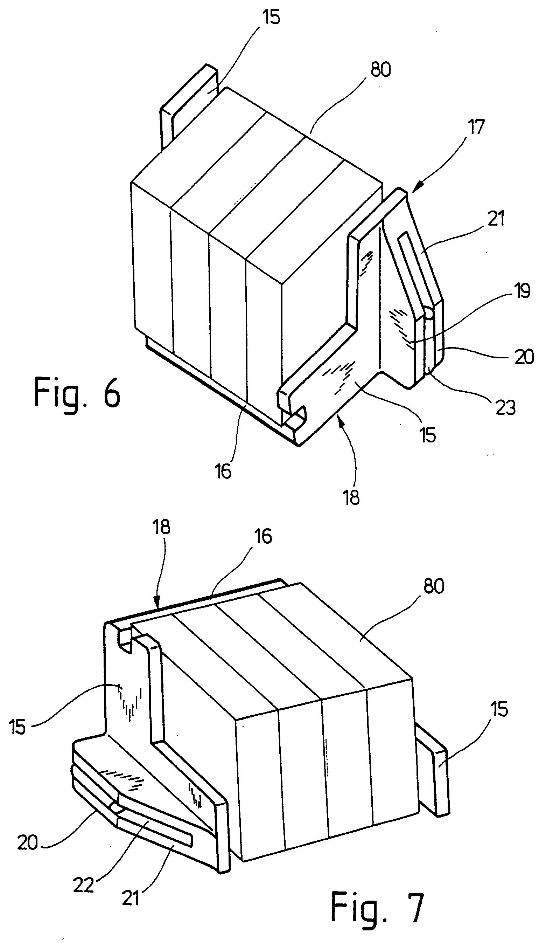

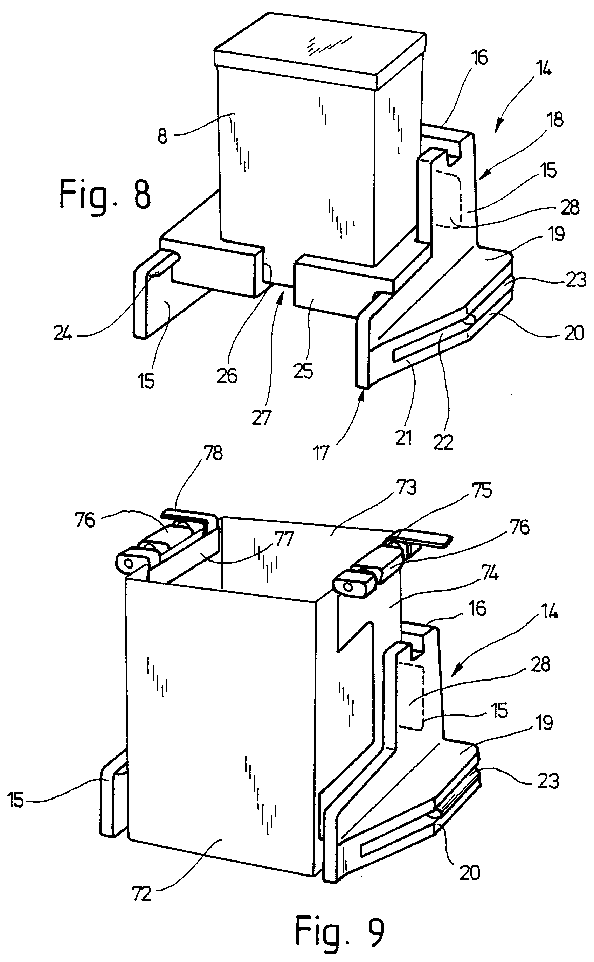

Zum Transport der Faltschachteln 8 und der Flaschen 8a dienen Trägerelemente 14, in denen die Faltschachteln 8 bzw. die Flaschen 8a aufgenommen sind. Diese Trägerelemente 14 sind in ihrem Außenumriß alle gleichgestaltet; auf ihrer Innenseite sind sie an die Gestalt und/oder Art des aufzunehmenden Gegenstandes, d.h. der Faltschachtel 8 oder der Flaschen 8a angepaßt. Der grundsätzliche Aufbau dieser Trägerelemente 14 ist insbesondere aus den Fig. 6 bis 8 zu ersehen:
Jedes Trägerelement 14 ist im wesentlichen in Gestalt eines U-förmigen Bügels mit zwei aufrechtstehenden zueinander parallelen Stirnwänden 15 im wesentlichen L-förmiger Gestalt und einem diese verbindenden ebenen Steg 16 ausgebildet. Die Stirnwände 15 und der Steg 16 können als massive Platten, wie dargestellt, oder als zumindest abschnittsweise durchbrochene Rahmen gestaltet sein. Sie definieren eine erste (in Fig. 8 horizontale) ebene Aufstellfläche 17, an die sich auf der Außenseite des Steges 16 eine rechtwinklig dazu verlaufende ebene Fläche 18 anschließt, die die Rückwand des U-förmigen Bügels bildet und als zweite Aufstellfläche Verwendung finden kann, wie dies die Fig. 6, 7 zeigen. An die beiden Stirnwände 15 ist in Transportrichtung gesehen außen jeweils eine vorspringende Leiste 19 unten angeformt, die vertikale ebene Flächenbereiche 20 trägt. Jedes der Trägerelemente 14 ist somit auf der Außenseite seiner beiden Stirnwände 15 mit zwei zueinander parallelen ebenen Flächenbereichen 20 versehen, an die sich zu der vorderen Öffnung des U-förmigen Bügels hin eine Schrägfläche 21 anschließt, die so orientiert ist, daß die beiden Schrägflächen 21 an den zwei Stirnwänden 15 nach vorne zu keilförmig aufeinanderzulaufen. Außerdem ist jede der Leisten 19 mit einem in eine Nut 22 eingesetzten elastischen Puffer 23 ausgerüstet.

Bei der Ausführungsform nach den Fig. 6, 7 ist zwischen die beiden Stirnwände 15 ein im wesentlichen quaderförmiger Gegenstand 80 eingefügt, der, wie angedeutet, auch aus vier gleichen Teilgegenständen zusammengesetzt sein kann und der im vorliegenden Fall, beispielsweise durch eine Faltschachtel 8 gebildet ist.

Bei der Ausführungsform nach Fig. 8 sind die beiden Seitenwände 15 auf ihrer Innenseite mit zwei parallelen Führungsleisten 24 ausgebildet, auf denen ein in Gestalt eines Einschubes ausgebildeter Einsatz 25 ruht, der von der Öffnung des U-förmigen Bügels her eingeschoben ist. Der Einsatz 25 ist innen mit einer Ausnehmung 26 versehen, die der Form der bei 8 angedeuteten Faltschachtel angepaßt ist. Ein Schlitz 27 an der Vorderseite des Einsatzes 25 erlaubt den Zugriff auf die Faltschachtel 8, beispielsweise um diese aus dem Einsatz 25 auszuheben oder sie sonstwie zu manipulieren.

Für die Flaschen 8a der Anlage nach Fig. 2 ist der Einsatz 25 entsprechend der Umrißgestalt der Flaschen 8a ausgebildet, wie dies aus Fig. 2 ohne weiteres verständlich ist.

In den Steg 16 jedes der Trägerelemente 14 ist schließlich ein Eisen- oder Magnetplatte 28 eingelassen, die in Fig. 8 gestrichelt angedeutet ist und es erlaubt, das Trägerelement mit einem Magnet- oder Eisenbandförderer zu kuppeln.

Bei den in den Fig. 1, 2 dargestellten Anlagen ist das Einlaufförderband 9 jeweils als ein solcher Magnetbandförderer ausgebildet, der ein in Höhe der Eisenplatte 28 der auf einem horizontalen Tisch 30 abgestützten Trägerelemente angeordnetes endloses Band 31 aufweist, das um zwei Umlenkrollen mit vertikaler Achsausrichtung umläuft, dem bei 32 angedeutete ortsfeste Elektromagnete zugeordnet sind, die die Trägerelemente 14 mit ihrem Steg 16 jeweils gegen das endlose Band 31 anpressen und damit eine reibschlüssige Kupplung zu diesem herstellen. Durch Steuerung der Erregung der Elektromagnete 32 kann die Mitnahmewirkung verändert werden, derart, daß die Trägerelemente auch vorübergehend stillgesetzt oder aufgestaut werden können, wenn dies im Verlaufe des Transportvorganges erforderlich ist.

Während bei den Anlagen nach den Fig. 1, 2 auch das Auslaufförderband 13 jeweils entsprechend als Magnetbandförderer mit einem umlaufenden, endlosen Band 31 und zugeordneten Elektromagneten 32 gestaltet ist, ist bei der Anlage nach Fig. 3 der Auslaufförderer 13 mit einem Gurtförderer 33 versehen, der im wesentlichen horizontal ausgerichtet ist.

Das Auslaufförderband 13 und das Einlaufförderband 19 sind jeweils durch eine geschlossene Förderbahn miteinander verbunden, auf der die Trägerelemente 14 umlaufen können. Diese Transportbahn enthält bei der Anlage nach Fig. 1 anschließend an das Auslaufförderband 13 und eine bei 34 angedeutete Laschenlegestation sowie eine Leimstation 35, eine gegebenenfalls geneigte Ausschubbahn 36, auf die ein halbkreisförmiger Kettenförderer 37 folgt, dessen Mitnehmer bei 38 angedeutet sind. Der Kettenförderer 37 übergibt die Trägerelemente 14 an einen Gurtförderer 40, der die Trägerelemente 14 wiederum in den Bereich des als Magnetbandförderer ausgebildeten Eingangsförderbandes 9 transportiert.

Die Wirkungsweise der Anlage in Fig. 1 ist wie folgt:
Die leeren Trägerelemente 14, die entsprechend der Ausführungsform nach 7 oder 8 als U-förmige Bügel gestaltet sind, werden von dem Gurtförderer 40, auf dem sie mit ihrer ebenen Aufstellfläche 17 aufliegen, in eine Faltschachtelübergabestation 39 gefördert, in der das vorderste Trägerelement 14 jeweils kurzzeitig angehalten wird, solange bis einer von einer Faltschachtelaufrichtmaschine 40 zugeführte aufgerichtete Faltschachtel 8 in das Trägerelement 14 entsprechend Fig. 7 eingesetzt ist. Während dieses Stillstands des zuvorderst stehende Trägerelementes 14 werden die nachfolgenden Trägerelemente 14 aufgestaut. Da sie aneinander benachbarten Stirnflächen ebene parallele Flächenabschnitte 20 aufweisen (Fig. 8) ist eine einwandfreie Staureihe gewährleistet, wobei die Trägerelemente 14 auf ihrer Aufstellfläche 17 gleichzeitig kippsicher stehen.

Nach dem Einbringen der Faltschachtel 8 wird durch entsprechende Steuerung des Magnetförderbandes des Einlaufförderers 9 das entsprechende Trägerelement 14 in Transportrichtung von dem Einlaufförderer 9 mitgenommen, durch eine mit Bodenfaltweichen und entsprechenden Verleimeinrichtungen ausgerüstete Bodenfaltstation 42 durchgeführt und auf den Einlauftisch 30 gebracht, wo die Trägerelemente 14 zunächst wieder aufgestaut werden bis sie einzeln gesteuert dem Einlaufkreuz 11 zugefördert werden. Das Einlaufkreuz 11 greift an dem ihm übergebenen Trägerelement 14 seitlich an und bringt es mit der Faltschachtel 8 auf eine Wägezelle 3 (Fig. 3), auf der es unter gleichzeitiger Befüllung der Faltschachtel 8 zu dem Auslaufkreuz 12 läuft.

Das Auslaufkreuz 12 übergibt das Trägerelement 14 mit der gefüllten Faltschachtel 8 dem als Magnetförderband ausgebildeten Auslaufförderer 13, von dem aus es nach Durchlaufen der Laschenlegestation 34 und der Leimstation 35 auf die Ausschubbahn 36 gelangt, die nach unten geneigt angeordnet oder mit einem Ketten-, Platten- oder Gurtförderer versehen sein kann, wobei auf dem entsprechenden Transportweg noch Kopffaltweichen durchlaufen werden können.

Auf der Ausschubbahn 36 werden die Trägerelemente 14 bei 44 paarweise stirnseitig aneinander anschließend stillgesetzt; die gefüllten und verschlossenen Faltschachteln 8 werden ausgeschoben und in einer Preßstrecke 45 kurzzeitig zusammengepresst, um ein sicheres Abbinden der Verleimungen zu gewährleisten. Anschließend werden sie bei 46 abgeführt.

Die leeren Trägerelemente werden auf den Kettenförderer 37 übergeben, der mit seinen Mitnehmern 38 seitlich an der jeweils ebenen Fläche 20 angreift und das jeweilige Trägerelement 14 wieder in den Bereich des Gurtförderers 40 bringt.

Ersichtlich sind die Trägerelemente 14 dazu eingerichtet, von verschieden wirkenden Fördermitteln in Gestalt von Magnetbandförderern, Gurtförderern, Kettenförderern etc. transportiert zu werden, wobei sie gleichzeitig bedarfsgemäß aufgestaut werden können.

Grundsätzlich gleiches gilt auch für die Ausführungsform nach Fig. 2, zu der es genügt zu erwähnen, daß die leeren Flaschen 8a bei 47 über einen Elevator einem Zuführförderband 48 zugeführt werden, das beispielsweise als Kettenförderer ausgebildet ist und die Flaschen 8a in vorbestimmten Abständen taktgemäß bei 49 in Trägerelemente 14 einsetzt. Die Anordnung kann dabei derart getroffen sein, daß die Flaschen 8a bei ihrer Zufuhr jeweils in einem Einsatz 25 sitzen (Fig. 8), der bei 49 in das Trägerelement 14 einfach eingeschoben wird. Die leeren Trägerelemente 14 werden auch hier über einen Gurtförderer 40 zugeführt, der die Trägerelemente 14 beispielsweise wiederum von einem Kettenförderer 37 übernimmt, dessen Mitnehmer an den ebenen seitlichen Flächenbereichen 20 angreifen. Zwischen dem als Magnetförderband ausgebildeten Auslaufförderband 13 und dem Kettenförderer 37 ist ein Gurtförderer 50 vorgesehen, der die gefüllte Flaschen 8a enthaltenden Trägerelemente einzeln in eine Ausschubstation 51 bringt, in der die Flaschen 8a aus den Trägerelementen ausgeschoben und auf ein Austragband 52 gebracht werden.

Bei 53 ist schließlich noch eine Deckeleinsetzstation für die von dem Auslaufförderband 13 vorbeigeführten in den Trägerelementen 14 enthaltenen gefüllten Flaschen 8a vorgesehen.

Der Füllvorgang der Flaschen 8a braucht im einzelnen nicht nochmals geschildert zu werden. Die Trägerelemente 14 laufen ähnlich wie bei Fig. 1 auf einer geschlossenen Bahn, die aus verschiedenartigen Fördermitteln zusammengesetzt ist.

Grundsätzlich gleiches gilt auch für die Anlage nach Fig. 3, bei der, wie bereits erwähnt, das Auslaufförderband 13 einen Gurtförderer 33 aufweist, der die gefüllten Schachteln zu einer Ausschubstation 55 bringt, in der sie über einen Schiebermechanismus 56 einzeln auf ein Austrageförderband 57 aufgebracht werden.

An das Auslaufförderband 13 schließt sich ein Kettenförderer 58 an, der die leeren Trägerelemente entsprechend Fig. 7 durch eine Kontrollwaage 59 zu einer halbkreisförmigen Röllchenbahn 60 bringt, die ihrerseits wiederum zu einer Gurt- oder Plattenförderbahn 61 führt, welche sich an das Einlaufförderband 9 anschließt.

Die insoweit beschriebene Anlage entspricht im Grundsatz jener nach Fig. 1, so daß sich eine nochmalige Erläuterung erübrigt. Es genügt darauf hinzuweisen, daß die Trägerelemente 14 so gestaltet sind, daß sie auch über die Röllchenbahn 60 laufen können. Abweichend von Fig. 1 ist aber innerhalb des von der Röllchenbahn 60 umschlossenen Raumes ein automatisches Packmittelwechselsystem 62 angeordnet, das einen um eine vertikale Drehachse umlaufenden Schalttisch 63 aufweist, der zum Umfang hin offene im wesentlichen U-förmige Aufnahmefächer 64 trägt, in die an einer Übergabestation 65 von nicht weiter dargestellten Übergabemitteln jeweils vier Trägerelemente 14 einschiebbar sind. Wie aus der Fig. zu ersehen, sind die vier Trägerelemente 14 in zwei Schichten paarweise nebeneinander stehend gruppiert.

Durch eine entsprechende Schaltbewegung des Schalttisches 63 können die einzelnen Aufnahmefächer 64 aufeinanderfolgend dem Gurtförderer 61 gegenüber gestellt werden, worauf die Trägerelemente 14 paarweise derart ausgeschoben werden, daß sie auf dem Gurtförderer 61 eine Reihe bilden.

Durch entsprechende Steuerung des Packmittelwechselsystems 62 kann auf diese Weise erreicht werden, daß beim Produktwechsel die Trägerelemente 14 automatisch bei 65 aus dem Transportweg herausgenommen und nicht auf die Röllchenbahn 60 übergeben werden. Gleichzeitig werden auf der gegenüberliegenden Seite die neuen Trägerelemente 14 auf den Gurtförderer 61 übergeben.

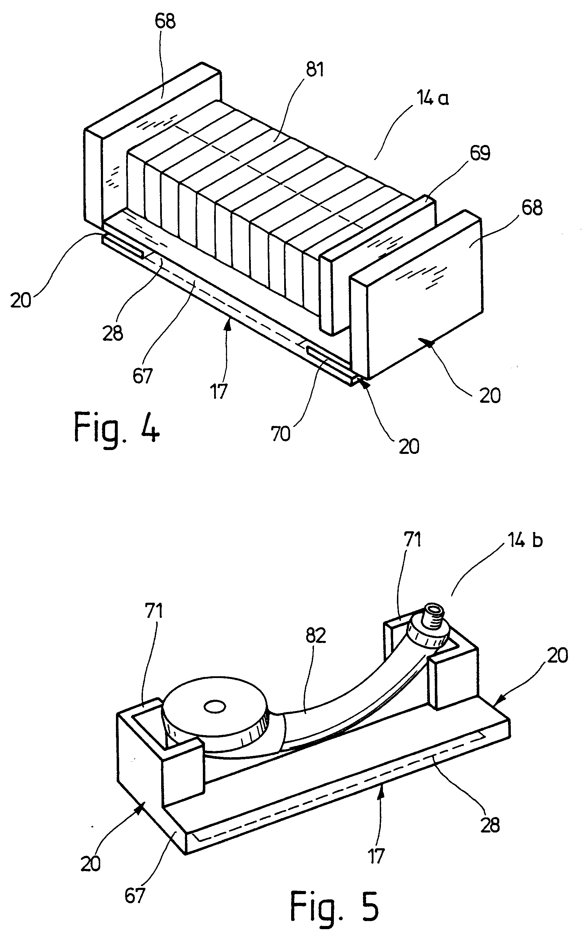

Die Trägerelemente 14 können ansich verschieden gestaltet sein; wesentlich ist nur, daß sie für das Zusammenwirken mit wahlweise verwendbaren verschiedenen Fördermitteln eingerichtet sind, so daß eine universelle Verwendbarkeit gewährleistet ist. Beispielsweise in Fig. 4 ist eine Ausführungsform von Trägerelementen 14a dargestellt, bei der jedes Trägerelement eine rechteckige Grundplatte 67 aufweist, an die sich in Transportrichtung gesehen zwei aufrecht stehende, parallele Stirnwandbereiche 68 anschließen, so daß sich insgesamt die Gestalt eines U-förmigen Bügels ergibt. Das Trägerelement ist verstellbar und zu diesem Zwecke ist auf der Grundplatte 67 eine Klemmplatte 69 längsverschieblich geführt, die durch eine nicht weiter dargestellte Stellspindel vorbewegt werden kann, um zusammen mit dem gegenüberliegenden Stirnwandbereich 68 dazwischenliegende Gegenstände 81, beispielsweise Papiertaschentuchpakete, einzuklemmen, die so einer Verpackungs- oder Behandlungsstation zugeführt werden können. An der Grundplatte 67 und den Stirnwandbereichen 68 sind wieder parallele ebene Flächenbereiche angeordnet, die entsprechend Fig. 8 mit 20 bezeichnet sind. Die Grundplatte kann schließlich noch quer verlaufende endseitig angeordnete Führungsnuten 70 aufweisen.

Bei der Ausführungsform nach Fig. 5 ist auf der ebenen Grundplatte 67 des Trägerelementes 14b eine Aufnahmeinrichtung in Gestalt zweier U-förmiger Halter 71 angeordnet, in die ein Gegenstand 82, beispielsweise in Gestalt einer Dusche, eingelegt ist, der damit für die Bewegung sicher aufgenommen ist. Die rechteckige Grundplatte weist stirnseitig wieder die parallelen ebenen Flächenabschnitte 20 auf.

Fig. 9, schließlich, zeigt eine Ausführungsform eines Trägerelementes 14 entsprechend Fig. 8, die zur Aufnahme eines Beutels 72 eingerichtet ist, der mit aufgespreizter Füllöffnung 63 gehalten ist. Zu diesem Zwecke sind zwischen die beiden Stirnwände 15 zwei etwa U-förmige Tragbleche 74 eingefügt, die parallel zueinander ausgerichtet oben jeweils einen Klemmechanismus 75 tragen, der jeweils einen an dem zugeordneten Tragblech 74 angeordnetes Lagerteil 76 und eine an diesem schwenkbar gelagerte Klemmklappe 77 aufweist, die über einen Betätigungshebel 78 entgegen der Kraft einer nicht weiter dargestellten Schlingfeder verschwenkt werden kann. Der Beutel 72 ist an gegenüberliegenden Seiten im Bereiche seiner Füllöffnung 73 zwischen den Trageblechen 74 und den Klappenteilen 77 federelastisch gehalten und kann damit in dem Träger 14 durch eine Füllanlage durchgeführt werden, wie sie beispielsweise in den Fig. 1 bis 3 dargestellt ist. Die Tatsache, daß der Beutel 72 ansich instabil ist, fällt wegen des Trägers 14 nicht nachteilig ins Gewicht.

Auch bei dem Träger 14 nach Fig. 9 ist die Eisenplatte 28 in den Steg 16 vorgesehen während bei den Ausführungsformen nach den Fig. 4, 5 eine entsprechende Eisenplatte 28 in der Sockelplatte 67 angeordnet ist, wie dies in den Fig. gestrichelt angedeutet ist.

Die bereits erläuterte Ausführungsform nach Fig 6, 7 erlaubt es schließlich, den Gegenstand wahlweise in der in Stellung nach Fig. 6 oder in der um 90° gekippten Stellung nach Fig. 7 zu transportieren. Beide Flächen 17, 18 bilden jeweils stabile, kippsichere Aufstellflächen für den Träger 14, wobei gegebenenfalls noch zusätzlich in den Leisten 19 Eisenplatten angeordnet sein können, um das Zusammenwirken mit einem Magnetbandförderer auch in der Stellung nach Fig. 6 zu ermöglichen.

Selbstverständlich können auch bei der Ausführungsform nach den Fig. 6, 7 die beiden Stirnwände 15 anschließend an den Steg 16 durch eine Bodenwand miteinander verbunden sein, falls die Art der zu transportierenden Gegenstände dies für notwendig erscheinen läßt.

Die Trägerelemente sind sowohl für kontinierliche als auch für taktweise arbeitende Transportvorgänge brauchbar. Sie können erforderlichenfalls auch Ausnehmungen oder dergleichen Einrichtungen aufweisen, die eine formschlüssige Kupplung außerhalb der Flächenbereiche mit Mitnehmen usw. gestatten.

## Patentansprüche

1. Vorrichtung zur Handhabung von Gegenständen beim Transport, insbesondere durch Abfüll- und/oder Verpackungsanlagen, mit Transportmitteln zum Fördern der Gegenstände zu wenigstens einer Behandlungsstation, sowie mit der Form und/oder der Art der Gegenstände angepassten, eine ebene Aufstellfläche aufweisenden Trägerelementen, in denen die Gegenstände vorübergehend aufgenommen sind und die mit den Transportmitteln zusammenwirkend ausgebildet sind, dadurch gekennzeichnet, daß die Trägerelemente (14a, b) in Transportrichtung gesehen beidseitig mit zueinander parallelen Flächenbereichen (20) versehen sind und daß sie zur wahlweisen Förderung auf unterschiedlichen Transportmitteln eingerichtet sind.

2. Vorrichtung nach Anspruch 1, dadurch gekennzeichnet, daß die Trägerelemente (14) auf wenigstens zwei aneinander angrenzenden Seiten zwei für den Transport wahlweise verwendbare Aufstellflächen (17, 18) aufweisen.

3. Vorrichtung nach Anspruch 1 oder 2, dadurch gekennzeichnet, daß die Trägerelemente (14a, b) parallel zur Aufstellfläche (17) eine im wesentlichen rechteckige Außenumrißgestalt aufweisen.

4. Vorrichtung nach einem der vorhergehenden Ansprüche, dadurch gekennzeichnet, daß die Trägerelemente (14a, b) eine im wesentlichen rechteckige Grundplatte (67) aufweisen, auf der Aufnahmemittel (69; 71) für wenigstens einen Gegenstand (81; 82) angeordnet sind.

5. Vorrichtung nach Anspruch 4, dadurch gekennzeichnet, daß die Aufnahmemittel (69) verstellbar ausgebildet sind.

6. Vorrichtung nach einem der vorhergehenden Ansprüche, dadurch gekennzeichnet, daß die Trägerelemente (14a, b) im wesentlichen nach Art eines U-förmigen Bügels ausgebildet sind.

7. Vorrichtung nach einem der vorhergehenden Ansprüche, dadurch gekennzeichnet, daß die Trägerelemente (14) auf in Transportrichtung einander gegenüberliegenden Seiten vorstehende Leisten (19) aufweisen, an denen die parallelen Flächenbereiche (20) ausgebildet sind.

8. Vorrichtung nach Anspruch 7, dadurch gekennzeichnet, daß an den Leisten (19) zu einer Seite der Trägerelemente hin abgeschrägte Bereiche (21) angeordnet sind, die zu einer Seite hin keilförmig zusammenlaufend ausgebildet sind.

9. Vorrichtung nach einem der Ansprüche 6 bis 8, dadurch gekennzeichnet, daß der Bügel wenigstens einen der Gestalt zumindest eines Gegenstandes (8) angepaßten Einsatz (25) aufweist, der zu einer Seite herausnehmbar ausgebildet ist.

10. Vorrichtung nach Anspruch 9, dadurch gekennzeichnet, daß der Einsatz als Einschub (25) ausgebildet ist, der auf Führungsmitteln (24) des Bügels verschieblich aufgenommen ist.

11. Vorrichtung nach einem der Ansprüche 6 bis 10, dadurch gekennzeichnet, daß der Bügel wenigstens zwei rechtwinklig zueinander stehende Wände (15, 16) aufweist, die gegebenenfalls durch eine Bodenwand miteinander verbunden sind.

12. Vorrichtung nach den Ansprüchen 5 und 11, dadurch gekennzeichnet, daß das Trageelement wenigstens ein auf einer Grundfläche längsverstellbar gelagertes Haltemittel (69) aufweist, dem Verstellmittel zugeordnet sind.

13. Vorrichtung nach einem der vorhergehenden Ansprüche, dadurch gekennzeichnet, daß das Tragelement (14) Einrichtungen (75) zur lösbaren Aufnahme wenigstens eines Beutels (72) oder Sackes aufweist, durch die der Beutel oder Sack mit aufgespreizter Füllöffnung (73) haltbar ist.

14. Vorrichtung nach einem der vorhergehenden Ansprüche, dadurch gekennzeichnet, daß die Trägerelemente (14a, b) an den parallelen Flächenbereichen (20) mit elastischen Puffern (23) versehen sind.

15. Vorrichtung nach einem der vorhergehenden Ansprüche, dadurch gekennzeichnet, daß bei den Trägerelementen (14a, b) wenigstens eine Wand als Rahmen ausgebildet ist.

16. Vorrichtung nach einem der vorhergehenden Ansprüche, dadurch gekennzeichnet, daß die Trägerelemente (14a, b) feromagnetische Mitnehmereinrichtungen (28) aufweisen.

17. Vorrichtung nach einem der vorhergehenden Ansprüche, dadurch gekennzeichnet, daß die Transportmitteleinrichtungen (39; 44; 63, 65) zum Gruppieren von Trägerelementen (14) aufweisen.

18. Vorrichtung nach Anspruch 17, dadurch gekennzeichnet, daß die Transportmitteleinrichtungen (63) zum selbsttägigen Auswechseln von Trägerelementen aufweisen.

19. Vorrichtung nach Anspruch 18, dadurch gekennzeichnet, daß die Auswechseleinrichtungen einen jeweils Gruppen von Trägerelemente (14) aufnehmenden Rundschalttisch (63 aufweisen, dem zu- und abführende Förderer (58, 61) zugeordnet sind.
